(19) Europäisches Patentamt
European Patent Office
Office européen des brevets

(11) **EP 2 631 582 B1**

(12) **EUROPEAN PATENT SPECIFICATION**

(45) Date of publication and mention
of the grant of the patent:
**18.03.2020 Bulletin 2020/12**

(51) Int Cl.:
***F27B 7/32*** *(2006.01)*      ***F27B 7/34*** *(2006.01)*
***F23G 5/20*** *(2006.01)*

(21) Application number: **12156578.2**

(22) Date of filing: **22.02.2012**

(54) **System and method for manufacturing cement clinker**

System und Verfahren zur Herstellung von Zementklinker

Système et procédé de fabrication de scorie de ciment

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.08.2013 Bulletin 2013/35**

(73) Proprietor: **Cemex Trademarks Holding Ltd
6300 Zug (CH)**

(72) Inventors:
• **Medina Ayala, Carlos
33154 Salzkotten (DE)**

• **Kristof Peters, Jan
33154 Salzkotten (DE)**

(74) Representative: **Carvajal y Urquijo, Isabel et al
Clarke, Modet & Co.
Suero de Quiñones, 34-36
28002 Madrid (ES)**

(56) References cited:
**US-A- 5 555 823**

**Description**

TECHNICAL FIELD

The invention concerns cement clinker rotary kilns that do not have a dedicated, fuel supplied, pre-calciner equipment.

BACKGROUND

A cement clinker manufacturing plant without pre-calciner typically consists of a preheating tower, typically consisting of an array of multistage cyclones, one or more kiln entrance chutes, smoke chamber or riser ducts, connected to the rotary kiln, the rotary kiln with a front end main burner and a clinker cooling equipment.

To improve the production performances (throughput) of the over manufacturing line, portions of the plants located prior to the rotary kiln (riser duct) shall be heated up to a temperature located between 850°C and 1050°C to enable decarbonation of the limestone from the clinker raw meal. This reaction being highly endothermic and taking place at temperatures higher than 850°C, it is easily understandable that enable partial decarbonation of the raw meal before entering the clinkerization kiln is of key relevancy for higher productivity.

Such can be achieved by increasing the energy input from the main front end burner, with the immediate consequence that the rotary kiln shell will undergo a critical thermal load that will drastically reduce the lifetime of the refractory bricks inside the kiln, leading to frequent interventions and replacement of the damaged refractory.

Adding supplement fuels sources from the inlet part (back end) of the kiln is not new since many systems use for instance a separate chute to feed solid chipped fuel, (e.g. shredded tires) through the riser duct into the kiln, however, the main disadvantages of such a known additional fuel input is that the solid fuel falls into the bed of material to be sintered and the combustion takes place inside the rotary kiln, leading to an important depletion in oxygen, itself yielding reducing conditions in the kiln atmosphere that is damageable to the quality of the clinker. As a main consequence, the use of such fuel injected in the back end part of the kiln is very limited (typically 3-10% of the total fuel supply) and is insufficient to obtained the desired temperatures in the riser duct.

Partial combustion of the fuel particles not only represents a waste of fuel, it also triggers a problem of clogging or a problem of emissions.

The use of various types of secondary fuels including fluffy RDFthrough the main burner located at the front end of the kiln is also known however the fluffy fuels injected through the main front end burner are completely burned in the kiln with excess combustion air since the distance between the main burner and the back end of the kiln (over 50 meters) and the temperature (above 1400°C), are very high. This favorable situation avoids oxygen depletion and reducing atmosphere conditions.

DESCRIPTION

The invention refers to a system of manufacturing cement clinker according to independent claim 1 and a method of manufacturing cement clinker according to claim 6.

The system for manufacturing cement clinker injecting fluffy shredded fuels particles from wastes as defined below comprises:

- A rotary thermally insulated tube (kiln)
- A main burner placed in a first end of the rotary tube configured to produce a flame; the velocity profile of the gases inside the rotary kiln moving from the front end to the back end of the kiln is located between 8 m/s and 12 m/s,
- At least one riser duct placed in the second end of the rotary tube,
- At least a second burner located opposite to the main burner and aligned on the kiln rotary tube axis with a penetration depth of the back end burner into the rotary tube above or equal to 0 meter, more specifically, it should be located between 0.05 meters and 2 meters to avoid problem of clogging and avoiding interference with the raw preheated material falling into the kiln,
- At least an air blower that allows various air flow and air velocities to transport the fuel particles and enter them into the rotary tube at the required velocity,
- A storage located to limit complicated transportation means, containing the fluffy shredded fuels particles from wastes,
- A connection chamber where the respective flows of fuels coming from the storage and air coming from the blower are brought together in one single flow of mixed fuel and air,
- a fuel dosing system (volumetric or by gravimetric) located between the lower part of the storage and the connection chamber (for instance a screw conveyor, a balance on a belt conveyor, a rotating valve, etc.) configured to vary the feeding conditions in velocity, flow and fuel and

- a rotary valve system located between the connection chamber and the fuel dosing system to limit the air flow perturbations from the blower in the fuel feed,
- if needed transportation means to transport the fuel particles from the storage to the connection chamber, and
- a connection pipe that guides the flow of mixed fuel particles and air to the the uphill section of the second burner located in the back end part of the rotary tube.

The penetration depth of the second burner tip (downhill end) into the kiln can be adapted depending on the various parameters to increase the residential time of the particle from the pipe end to the first cyclone (T max. around 820°C) in order to have at least a residential time of over 2 seconds to ensure full combustion. The length of the second burner is kept as short as possible to avoid problem of deformation by creep at high temperatures.

The diameter of the back end burner tube and the blower specifications are selected enable 5% - 30% of the total fuel input into the kiln

Fuels added from the back end side of the kiln that will not fall into the bed of material to sintered (clinkerized) will be entrained from the gas stream coming from the main burner. Therefore, adding light weight fuel from the back end of the kiln shall ensure that the injected particles are fully burned before they leave the riser duct to enter the first cycle where the temperate (around 820°C) will be too low to further bum the particles.

The advantages of the cement kiln and method described below are:

- Reduce the thermal load on the kiln, thus supplementing up to 25% of the main.fuel,
- Combustion of the additional fuel particles mainly in the riser duct of the kiln to raise the temperature to a level where efficient decarbonation of the limestone takes place,
- Avoid that a large portion of the additional fuel particles fall into the material bed into the kiln, provoking oxygen depletion and reducing atmosphere conditions,
- Ensure that the additional fuel particles are fully burned out before leaving the rising duct and entering the first cyclone.

BRIEF DESCRIPTION OF THE DRAWINGS

The description of the different components of the system provided above is complemented with a drawing aimed at facilitating understanding of its structure and operation.

Figure 1 shows a schematic cross section of the system of the invention.
Figure 2 shows a cross section II-II of figure 1.

In said figures the following references are indicated:

1.- rotary tube
2.- riser duct
3.-main burner
4.- flame
5.- second burner
6.- air blower
7.- storage
8.- fuel dosing system
9.- smoke chamber
10.- connection chamber
11.- connection pipe
12.- a rotary valve

DETAILED DESCRIPTION OF THE INVENTION

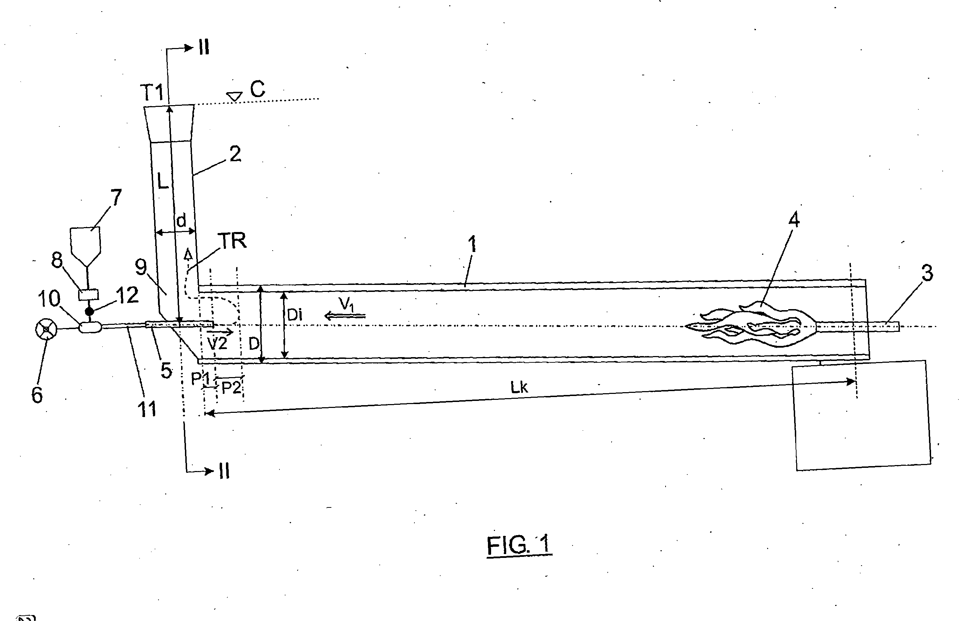

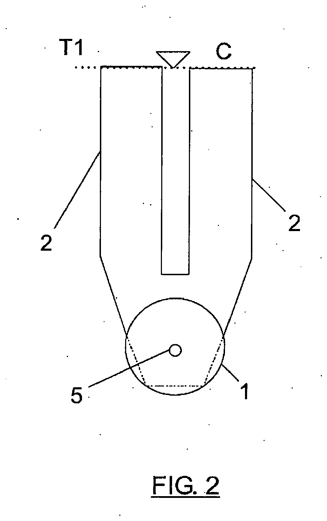

The system shown in figure 1 and 2 for manufacturing cement kiln comprises:

- A rotary thermally insulated rotary tube or kiln (1)
- A main burner (3) placed in a first end of the thermally insulated rotary tube (1),
- two riser ducts (2, 2') in the connected together via a smoke chamber (9) placed in the second end of the thermally insulated rotary tube (1)
- A second burner (5) located opposite to the main burner (3) in a second end of the rotary tube (1) and aligned on the rotary tube axis,

- At least an air blower (6),
- a storage (7) containing the fluffy shredded fuels particles from wastes,
- A fluffy shredded fuel dosing system (8) located in the lower part of the storage (7),
- a rotary valve (12), located between a connection chamber (10) and the fluffy shredded fuel dosing system (8),
- A connection chamber (10) to which are connected the rotary valve (12) of fluffy shredded fuel and the blower (6) where the respective flows of fuels coming from the storage (7) and air coming from the blower (6) are brought together in one single flow of mixed fuel and air, and
- A connection pipe (11) placed between the connection chamber (10) an the second burner (5),

being configured the fluffy shredded fuel dosing system (8), the rotary valve (12) and the air blower (6) to inject fluffy shredded fuels particles in air from the connection chamber (10) into the rotary thermally insulated tube (1) via the second burner (5) with a velocity between 40m/s and 80m/s.

The desired air and fuel particles velocity is achieved by selecting the performance of the blower (in pressure and flow capacity) with respect to the internal diameter of the second burner. Alternatively, the motor of blower may be equipped with variable speeds to allow variable flows.

The gases mainly produced by the flame (4) of the main burner (3) creates a gas stream in the thermally insulated rotary tube (1) of length LK , having an average velocity V1, that is typically located between 8 m/s and 12 m/s depending on the kiln internal diameter (Di, figure 2) and the kiln length LK.

Leaving the kiln in the back end part, the gases are guided through one or more riser ducts (2) of length L (typically between 20 and 40 meters), and then reach the first preheating cyclone (not shown) at a level C. Figure 2 shows a schematic view of the kiln (1) and the two riser ducts (2, 2') connecting to the kiln (1).

The second burner (5) is located opposite to the main burner (3) and is aligned on the kiln axis. The details of the second burner (5) are not shown but the burner is designed based on tow concentric tubes with respective diameters Dint and Dext, where Dint is around 80-120 mm. It can noted that Dint may have different dimensions depending on the location, for example the value of Dint is smaller for the part of the burner that is located in the riser duct and smoke that the part located outside the riser duct and smoke chamber to enable an increase of the air and fuel particles velocities into the kiln.

On figure1, it can be seen schematically that the particles of fuels injected through the second end burner (5), depending on their properties as well as the support air, will have a trajectory of type TR, travelling along the rotary thermally insulated tube for a distance P2 before being entrained by the gas flow from the rotary thermally insulated tube (1) into the riser ducts (2).

With the described system cement kiln can be manufactured by injecting in the rotary thermally insulated tube (1) through the second burner (5) between 5% and 25% of the total fuel injected in the rotary thermally insulated tube (1) of fluffy shredded fuels particles from wastes in an air flow with a velocity between 40m/s and 80m/s opposite to the velocity of the gases from the main burner (3)

The main objective here is:

a) to avoid that a maximum of 25% in weight of particles injected through the back end burner do fall into the bottom of the kiln,

b) to avoid that the combustion of the particles takes place into the kiln since the aim of the invention is to enable the combustion of the particles in the riser duct(s) and

c) to ensure that the particles are completely combusted before reaching the level C on top of the riser duct(s) (2) represented by the entrance into the first cyclone.

The particles are completely combusted before reaching the level C on top of the riser ducts (2) by increasing the residential time in the kiln and in the riser duct of 5% and 25% of the total fuel injected in the rotary thermally insulated tube (1) of fluffy shredded fuels particles from wastes in an air flow. This increase of the residential time is achieved by determining optimum distances P1 (length of the second burner into the insulated rotary kiln, extending from the kiln seal with the smoke chamber) and P2 (penetration of the fuel particle from the second burner tip into the kiln)

The temperature T1 at the location C is at 810°C-860°C (T1).

On figure 1, the penetration depth P1 of the back end burner tip (5) into the kiln (1) is represented. This distance has to be above or equal to 0 meter, more specifically, it should located between 0.05 meters and 2 meters to avoid problem of clogging and avoiding interference with the raw preheated material falling into the rotary thermally insulated tube (1). Also, this distance can be adapted in order to increase the distance between the back end burner tip (3) and the level C and temperature T1 if the dimensions of the riser ducts (2), namely the height L and the diameters d do not allow the residential time to be around 2 seconds according to the following equation:

$$\text{residential time} \quad = \quad \text{ducts volume/gas flow rate in the kiln} \quad \geq \quad 2 \text{ seconds.}$$

As the air injected with the fuel particles through the back end burner (5) will also be entrained into the riser ducts, the combustion will then take place with enough oxygen inside the riser duct(s) (2).

The distance P1 + P2 is determined in order to increase the residential time of the fuel particles in the kiln so that complete combustion in the riser duct occurs before passing the level C.

The distance P1 cannot be extended over 2 meters since there is a risk of creep of the burner.

The air and fuel particles velocity $V_2$ at the tip of the second burner is thus selected to increase the value of $P_2$.

The following table 1 shows Fluid dynamics simulations for P2, as an average of the fuel particle size distribution into the kiln, and $V_2$, as a fuel in air inlet velocity, with a fuel feed of 4000 kg/hour.

TABLE 1

| $V_2$ (m/s) | $P_2$ average (m) | $P_{2\ max}$ (m) |
|---|---|---|
| 20 | 5.5 | 8.8 |
| 40 | 8.4 | 13.5 |
| 60 | 11 | 17.0 |
| 80 | 12.9 | 20.7 |

As can be seen in above table 1, the higher $V_2$ the higher $P_2$ (m), this means that with the described system and operating parameters, the average fuel particle will increase its residential time in the kiln and riser duct due to the increase in distance between the second burner tip and the level C.

The low value of V2 computed is 20m/s that is the conventional air speed to transport solid fuel (e.g. milled coal, secondary fuels, biomass, etc.). The speed of 20m/s is not sufficient to ensure a residential time in the kiln and the riser duct that is long enough to enable full combustion of the particle.

Adding 18-20 meters (P1 + 2x P2) enables to increase the residential time by over one second which it has been seen that it is sufficient to ensure that the particle will be completely burned reaching the first cyclone at the level C (residential time > 2 seconds).

Additionally it has been seen that 60m/s is the suitable speed given that at such parameter the P2 distance reached, adds in average 1.0 extra second to the particles so that they can be burned out completely..

V2 values above 80 m/s will not be relevant since the suitable residential time is already achieved with V2 velocities between 40 m/s and 80 m/s, Velocities higher than 80 m/s will have the disadvantage of having the main combustion of the fuel particle into the kiln (increased values of P2) whereas the target is to have the main combustion into the riser duct to reduce the thermal load on the kiln and increase the temperature if the riser duct. High values of P2 also have the drawback effect that fuel particles may touch the bed of raw materials and be entrained by the material flux.

The optimum parameters of the injection of mixture air and fuel particles into the rotary thermally insulated rotary tube (1) by the second burner (5) to achieve a residential time around 2 seconds, are a speed of 40 m/s to 80 m/s with a fuel feed of 1500 kg/hour to 6000 Kg/h.

The fluffy shredded fuel used to feed the second burner (5) is type fluffy RDF (Refused Derived Fuel) which is selected for its physical properties to be entrained by the gas flow V1 from the main burner (3) and avoid falling down to the rotary thermally insulated tube (1) bottom as would heavier particles.

The fuel particles have characterized using the Rosin, Rammler, Sperling and Bennett (RRSB) method for particle size distribution. The next table below shoes an example of the fuel particles used, where L1 and L2 are the 2 larger dimensions and h the smaller dimension of the particles:

| L1 | L2 | h | Volume | Density | Mass Fraction |
|---|---|---|---|---|---|
| [mm] | [mm] | [mm] | [mm$^3$] | [kg/m$^3$] | [ma-%] |
| 2 | 2 | 0.02 | 0.08 | 180 | 0.30 |

(continued)

| L1 | L2 | h | Volume | Density | Mass Fraction |
|---|---|---|---|---|---|
| [mm] | [mm] | [mm] | [mm$^3$] | [kg/m$^3$] | [ma-%] |
| 4 | 4 | 0.02 | 0.32 | 180 | 1.20 |
| 8 | 8 | 0.02 | 1.28 | 180 | 4.80 |
| 16 | 16 | 0.02 | 5.12 | 180 | 19.22 |
| 31.5 | 31.5 | 0.02 | 19.845 | 180 | 74.48 |

The heat value of the fluffy selected material is located between 2.5 and 5 Kcal/Kg, more specifically between 3 and 4.2 Kcal/Kg.

The second burner (5) is designed to enable up to 25% of total energy input in the rotary thermally insulated tube (1), reducing the energy input of the main burner (3) to 75% and strictly limiting the risk of thermal overload and damaging of the insulation internal lining.

Modification of the fluffy shredded fuel feed and the air velocity and amount can be achieved by respectively adapting the operating parameters fuel dosing system (8) and of the air blower (6) (fan speed).

Various tests have shown that the bulk density of the fluffy particles shall be located between 160 kg/m3 and 200 kg/m3, to optimize the advantages.

**Claims**

1. A system for manufacturing cement clinker which comprises:

   - a rotary thermally insulated kiln (1),
   - a main burner (3) placed in a first end of the rotary thermally insulated tube configured to produce a flame (4) injecting gases into the rotary thermally insulated kiln (1),
   - at least one riser duct (2) placed in the second end of the rotary thermally insulated kiln (1), and an additional energy supply system to the kiln (1) comprising:
   - a second burner (5) located opposite to the main burner and with a penetration depth P1 into the rotary thermally insulated kiln (1) above or equal to 0 meter,
   - at least an air blower (6),
   - a storage (7) containing shredded fuel particles from wastes,
   - a shredded fuel dosing system (8) located in the lower part of the storage (7),
   - a rotary valve (12), located between a connection chamber (10) and the shredded fuel dosing system (8),
   - a connection chamber (10) to which are connected the rotary valve (12) and the air blower (6), and
   - a connection pipe (11) placed between the connection chamber (10) and the second burner (5),

   the system being arranged to burn the shredded fuel particles using the second burner (5) so that shredded fuel particles have the main combustion in the at least one riser duct (2),
   **characterized in that**

   - the shredded fuel particles have a bulk density between 160 kg/m3 and 200 kg/m3,
   - the heat value of the shredded selected material is located between 2.5 and 5 Kcal/Kg,
   - the second burner (5), the rotary valve (12), the connection chamber (10) are designed to enable up to 25% of total energy input in the rotary thermally kiln (1),
   - the air blower (6), the penetration depth P1 are configured so that the shredded particles will have a residential time in the kiln (1) and in at least one riser duct (2) higher than 2 seconds before reaching the upper part of at least one riser duct (2), and
   - the air blower (6), the penetration depth P1 are configured so that the shredded particles in the air flow can have an adjustable velocity V2 opposite to the velocity of the gases injected by the main burner (3) located between 40m/s and 80m/s.

2. The system according to claim 1, wherein the fuel dosing system (8) is selected between volumetric dosing system or by gravimetric dosing system.

3. The system according to claim 1, wherein fuel dosing system (8) is a screw conveyor, a balance on a belt conveyor or a rotating valve.

4. The system according to any of previous claim, wherein the second burner (5) is aligned on the rotary thermally insulated tube (1) axis.

5. The system according to any of previous claims, wherein the penetration depth P1 of the second burner (5) into the rotary thermally insulated tube (1) is between 0.05 meters and 2 meters.

6. Method for manufacturing cement clinker, **characterized in that** it comprises injecting into a rotary thermally insulated kiln (1) through a second burner (5), located opposite to the main burner (3) of the rotary thermally insulated kiln (1) and with a penetration depth P1 into the rotary thermally insulated kiln (1) above or equal to 0 meter, between 5% and 25% in weight of the total fuel injected in the rotary thermally insulated tube (1) of shredded fuels particles from wastes with a bulk density between 160 kg/m3 and 200 kg/m3 in an air flow with an adjustable velocity V2 between 40m/s and 80m/s opposite to the velocity of the gases injected by the main burner (3); the penetration depth P1 of the second burner (5) and the velocity V2 being adjusted such that:

the shredded fuel particles injected through the second burner (5) are entrained by the gas stream coming from the main burner (3) into the at least one riser duct (2), having a residential time between the exit of the burner (5) and the upper part of the at least one riser duct (2) higher than 2 seconds so that the shredded fuel particles are completely combusted before reaching the top of the at least one riser duct (2);
the shredded fuel particles have the main combustion in the at least one riser duct (2) to reduce the thermal load on the rotary thermally insulated kiln (1) and increase the temperature of the at least one riser duct (2).

7. The method according to claim 6 wherein shredded fuels particles from waste in an air flow are injected into the rotary thermally insulated kiln (1) through the second burner (5) with a velocity between 60 m/s and 80 m/s.

8. The method according to claims 6 or 7 wherein it is injected in the rotary thermally insulated kiln (1) 1500 kg/hour to 6000 Kg/h of shredded fuels particles from waste in an air flow through the second burner (5).

**Patentansprüche**

1. System zur Herstellung von Zementklinker, das Folgendes umfasst:

- einen wärmeisolierten Drehrohrofen (1),
- einen Hauptbrenner (3), der an einem ersten Ende des wärmeisolierten Drehrohrs angeordnet ist und so ausgebildet ist, dass er eine Flamme (4) erzeugt, die Gase in den wärmeisolierten Drehrohrofen (1) injiziert,
- mindestens ein Steigrohr (2), der am zweiten Ende des wärmeisolierten Drehrohrofens (1) angeordnet ist, und ein zusätzliches Energieversorgungssystem für den Ofen (1), Folgendes umfassend:
- einen zweiten Brenner (5), der gegenüber dem Hauptbrenner angeordnet ist und mit einer Eindringtiefe P1 in den wärmeisolierten Drehrohrofen (1) von mehr als oder gleich 0 Metern,
- mindestens ein Luftgebläse (6),
- ein Lager (7), das zerkleinerte Brennstoffpartikel aus Abfällen enthält,
- ein Dosiersystem (8) für zerkleinerten Brennstoff, das sich im unteren Teil des Lagers (7) befindet,
- ein Drehventil (12), das zwischen einer Verbindungskammer (10) und dem Dosiersystem (8) für zerkleinerten Brennstoff vorgesehen ist,
- eine Verbindungskammer (10), an die das Drehventil (12) und das Luftgebläse (6) angeschlossen sind, und
- ein Anschlussrohr (11), das zwischen der Verbindungskammer (10) und dem zweiten Brenner (5) angeordnet ist,

wobei das System so angeordnet ist, dass die zerkleinerten Brennstoffpartikel unter Verwendung des zweiten Brenners (5) verbrannt werden, so dass die zerkleinerten Brennstoffpartikel die Hauptverbrennung in dem mindestens einen Steigrohr (2) erfahren,
**dadurch gekennzeichnet, dass**

- die zerkleinerten Brennstoffpartikel eine Schüttdichte zwischen 160 kg/m$^3$ und 200 kg/m$^3$ haben,
- der Heizwert des zerkleinerten ausgewählten Materials zwischen 2,5 und 5 Kcal/Kg liegt,

- der zweite Brenner (5), das Drehventil (12), die Verbindungskammer (10) so ausgelegt sind, dass sie bis zu 25% der gesamten Energiezufuhr in den thermischen Drehrohrofen (1) ermöglichen,
- das Luftgebläse (6), die Eindringtiefe P1 so ausgelegt sind, dass die zerkleinerten Partikel eine Verweilzeit im Ofen (1) und in mindestens einem Steigrohr (2) von mehr als 2 Sekunden haben werden, bevor sie den oberen Teil mindestens eines Steigrohrs (2) erreichen, und
- das Luftgebläse (6), die Eindringtiefe P1 so ausgelegt sind, dass die zerkleinerten Partikel im Luftstrom eine einstellbare Geschwindigkeit V2 haben können, die der Geschwindigkeit der vom Hauptbrenner (3) injizierten Gase entgegengesetzt ist, die zwischen 40m/s und 80m/s liegt.

2. System gemäß Anspruch 1, bei dem das Dosiersystem (8) für den Brennstoff zwischen einem volumetrischen Dosiersystem oder einem gravimetrischen Dosiersystem ausgewählt wird.

3. System gemäß Anspruch 1, wobei das Dosiersystem (8) für den Brennstoff ein Schneckenförderer, eine Waage auf einem Förderband oder ein Drehventil ist.

4. System gemäß einem der vorhergehenden Ansprüche, wobei der zweite Brenner (5) auf der Achse des wärmeisolierten Drehrohrs (1) ausgerichtet ist.

5. System gemäß einem der vorhergehenden Ansprüche, wobei die Eindringtiefe P1 des zweiten Brenners (5) in das wärmeisolierte Drehrohr (1) zwischen 0,05 Meter und 2 Meter beträgt.

6. Verfahren zur Herstellung von Zementklinker, **dadurch gekennzeichnet, dass** es das Injizieren in einen wärmeisolierten Drehrohrofen (1) durch einen zweiten Brenner (5), der gegenüber dem Hauptbrenner (3) des wärmeisolierten Drehrohrofens (1) angeordnet ist, und mit einer Eindringtiefe P1 in den wärmeisolierten Drehrohrofen (1) von mehr als oder gleich 0 Meter, von zwischen 5 und 25 Gew.-% des gesamten in das wärmeisolierte Drehrohr (1) injizierten Brennstoffs aus zerkleinerten Brennstoffpartikeln aus Abfällen mit einer Schüttdichte zwischen 160 kg/m$^3$ und 200 kg/m$^3$ in einem Luftstrom mit einer einstellbaren Geschwindigkeit V2 zwischen 40m/s und 80m/s entgegengesetzt zur Geschwindigkeit der vom Hauptbrenner (3) injizierten Gase umfasst; wobei die Eindringtiefe P1 des zweiten Brenners (5) und die Geschwindigkeit V2 so eingestellt werden, dass:

die durch den zweiten Brenner (5) injizierten zerkleinerten Brennstoffpartikel von dem vom Hauptbrenner (3) kommenden Gasstrom in das mindestens eine Steigrohr (2) mitgeschleppt werden, mit einer Verweilzeit zwischen dem Ausgang des Brenners (5) und dem oberen Teil des mindestens einen Steigrohrs (2) von mehr als 2 Sekunden, so dass die zerkleinerten Brennstoffpartikel vollständig verbrannt werden, bevor sie den oberen Teil des mindestens einen Steigrohrs (2) erreichen;
wobei die zerkleinerten Brennstoffpartikel die Hauptverbrennung in dem mindestens einen Steigrohr (2) erfahren, um die thermische Belastung des wärmeisolierten Drehrohrofens (1) zu verringern und die Temperatur des mindestens einen Steigrohrs (2) zu erhöhen.

7. Verfahren gemäß Anspruch 6, wobei zerkleinerte Brennstoffpartikel aus Abfall in einem Luftstrom durch den zweiten Brenner (5) mit einer Geschwindigkeit zwischen 60 m/s und 80 m/s in den wärmeisolierten Drehrohrofen (1) injiziert werden.

8. Verfahren gemäß Anspruch 6 oder 7, wobei in den wärmeisolierten Drehrohrofen (1) 1500 kg/Stunde bis 6000 kg/h zerkleinerte Brennstoffpartikel aus Abfall in einem Luftstrom durch den zweiten Brenner (5) injiziert werden.


**Revendications**

1. Système de fabrication de scorie de ciment qui comprend :

- un four rotatif thermiquement isolé (1),
- un brûleur principal (3) placé dans une première extrémité du tube rotatif thermiquement isolé configuré pour produire une flamme (4) injectant des gaz dans le four rotatif thermiquement isolé (1),
- au moins une conduite montante (2) placée dans la deuxième extrémité du four rotatif thermiquement isolé (1), et un système d'alimentation en énergie supplémentaire du four (1) comprenant :
- un deuxième brûleur (5) situé à l'opposé du brûleur principal et ayant une profondeur de pénétration P1 dans le four rotatif thermiquement isolé (1) supérieure ou égale à 0 mètres,

- au moins un souffleur d'air (6),
- un stockage (7) contenant des particules de combustible broyées provenant de déchets,
- un système de dosage de combustible broyé (8) situé dans la partie inférieure du stockage (7),
- une vanne rotative (12), située entre une chambre de connexion (10) et le système de dosage de combustible broyé (8),
- une chambre de raccordement (10) à laquelle sont raccordés la vanne rotative (12) et le souffleur d'air (6), et
- un tuyau de raccordement (11) placé entre la chambre de raccordement (10) et le deuxième brûleur (5),

le système étant agencé pour brûler les particules de combustible broyées à l'aide du deuxième brûleur (5) de sorte que les particules de combustible broyées ont la combustion principale dans l'au moins une conduite montante (2), **caractérisé en ce que**

- les particules de combustible broyées ont une densité apparente comprise entre 160 kg/m3 et 200 kg/m3,
- le pouvoir calorifique du matériau sélectionné broyé se situe entre 2,5 et 5 Kcal/Kg,
- le deuxième brûleur (5), la vanne rotative (12), la chambre de raccordement (10) sont conçus pour permettre un apport d'énergie jusqu'à 25% de l'énergie totale dans le four thermique rotatif (1),
- le souffleur d'air (6), la profondeur de pénétration P1 sont configurées de sorte que les particules broyées ont un temps de séjour dans le four (1) et dans au moins une conduite montante (2) supérieur à 2 secondes avant d'atteindre la partie supérieure d'au moins une conduite montante (2), et
- le souffleur d'air (6), la profondeur de pénétration P1 sont configurées de sorte que les particules broyées dans le flux d'air peuvent avoir une vitesse réglable V2, opposée à la vitesse des gaz injectés par le brûleur principal (3), située entre 40 m/s et 80 m/s.

2. Système selon la revendication 1, dans lequel le système de dosage de combustible (8) est sélectionné entre un système de dosage volumétrique ou un système de dosage gravimétrique.

3. Système selon la revendication 1, dans lequel le système de dosage de combustible (8) est un convoyeur à vis, une balance sur un convoyeur à bande ou une vanne rotative.

4. Système selon l'une quelconque des revendications précédentes, dans lequel le deuxième brûleur (5) est aligné sur l'axe du tube rotatif thermiquement isolé (1).

5. Système selon l'une quelconque des revendications précédentes, dans lequel la profondeur de pénétration P1 du deuxième brûleur (5) dans le tube rotatif thermiquement isolé (1) est comprise entre 0,05 mètres et 2 mètres.

6. Procédé de fabrication de scorie de ciment, **caractérisé en ce qu'**il comprend l'injection dans un four rotatif thermiquement isolé (1) à travers un deuxième brûleur (5), situé à l'opposé du brûleur principal (3) du four rotatif thermiquement isolé (1) et avec une profondeur de pénétration P1 dans le four rotatif thermiquement isolé (1) supérieure ou égale à 0 mètres, d'entre 5% et 25% en poids du combustible total injecté dans le tube rotatif thermiquement isolé (1) de particules de combustible broyées provenant de déchets avec une densité apparente comprise entre 160 kg/m3 et 200 kg/m3 dans un flux d'air à vitesse réglable V2 entre 40 m/s et 80 m/s opposée à la vitesse des gaz injectés par le brûleur principal (3) ; la profondeur de pénétration P1 du deuxième brûleur (5) et la vitesse V2 étant réglées de sorte que :

les particules de combustible broyées injectées par le deuxième brûleur (5) sont entraînées par le flux de gaz provenant du brûleur principal (3) dans l'au moins une conduite montante (2), ayant un temps de séjour entre la sortie du brûleur (5) et la partie supérieure de l'au moins une conduite montante (2) supérieur à 2 secondes, de sorte que les particules de combustible broyées sont complètement brûlées avant d'atteindre le la partie supérieure de l'au moins une conduite montante (2) ;
les particules de combustible broyées ont la combustion principale dans l'au moins une conduite montante (2) pour réduire la charge thermique sur le four rotatif thermiquement isolé (1) et augmenter la température de l'au moins une conduite montante (2).

7. Procédé selon la revendication 6, dans lequel des particules de combustible broyées provenant de déchets dans un flux d'air sont injectées dans le four rotatif thermiquement isolé (1) à travers le deuxième brûleur (5) avec une vitesse comprise entre 60 m/s et 80 m/s.

8. Procédé selon les revendications 6 ou 7, dans lequel on injecte dans le four rotatif thermiquement isolé (1) de 1500 kg/h à 6000 kg/h de particules de combustible broyées provenant de déchets dans un flux d'air à travers le deuxième brûleur (5).

FIG. 1

FIG. 2